# EUROPEAN PATENT APPLICATION

(11) **EP 1 235 014 A2**
(43) Date of publication of application: **28.08.2002**
(21) Application number: 02075205.1
(22) Date of filing: 18.01.2002
(51) Int. Cl.: F16K 31/06

(54) **Solenoid valve**

(30) Priority: 26.02.2001 US 792976
(71) Applicant: Delphi Technologies, Inc., Troy, MI 48007 (US)
(72) Inventor: Carrillo, Conrado, Juarez, Chihuahua 32360 (MX); Rodriguez, Lorenzo Guadalupe, El Paso, TX 79912 (US); Pelka, Jean-Francois, El Paso, TX 79912 (US)
(74) Representative: Denton, Michael John

(57) **Abstract**

A solenoid valve (10) includes a plunger (64) that includes a conical plunger tip (78) and an outlet tube (28) that is formed with an outlet passage (29). The outlet passage (29) includes a first frusto-conical portion (84) into which the plunger tip (78) fits. The plunger (64) is movable between a closed configuration wherein the plunger (64) engages the outlet tube (28) to block fluid flow through the outlet passage (29) and an open configuration wherein the plunger (64) is distanced from the outlet tube (28) to permit fluid flow through the outlet passage (29). As the plunger (64) moves, there is only one restriction of flow between the plunger (64) and the outlet tube (28) for each position of the plunger (64). As such, the flow through the valve (10) is linear with respect to the motion of the plunger (64) and the solenoid valve (10) can be used to easily and accurately control the flow rate of fluid therethrough.

## Description

### TECHNICAL FIELD

The present invention relates to motor vehicle sensors and actuators.

### BACKGROUND OF THE INVENTION

In order to comply with state and federal environmental regulations, most motor vehicles are now equipped with a carbon canister installed to trap and store petroleum fuel vapors from the carburetor bowl and/or the fuel tank. With the canister, fuel vapors are not vented to the atmosphere, but are instead trapped in the canister and then periodically purged from the canister into the engine where they are burned along with the air-fuel mixture.

Solenoid valves have been provided that are used to purge the fuel vapor from the carbon canister. Unfortunately, many of these valves do not provide continuous flow at different valve positions. Moreover, many of these valves do not provide precise purging at engine idle, i.e., these valves are unable to accurately control the rate of flow through the valve.

As such, the present invention has recognized these prior art drawbacks, and has provided the below-disclosed solutions to one or more of the prior art deficiencies.

### SUMMARY OF THE INVENTION

A solenoid valve an outlet tube that forms an outlet passage. A plunger is slidably disposed within the solenoid valve. The plunger is movable between a closed configuration, wherein the plunger engages the outlet tube to block fluid flow through the outlet passage, and an open configuration, wherein the plunger is distanced from the outlet tube to permit fluid flow through the outlet passage. The plunger and the outlet tube are configured to provide a flow rate that is linearly proportional to the motion of the plunger. Moreover, the flow rate is continuous and allows for relatively accurate control of the flow at low currents for purging of a carbon canister at idle.

Preferably, the outlet passage includes a first frusto-conical portion that contracts to a neck. Moreover, the plunger includes a conical plunger tip that fits into the first frusto-conical portion. In a preferred embodiment, the first frusto-conical portion defines a contraction angle that is in a range from twenty-two and sixty-two one-hundredths degrees to forty-six and ninety-eight one-hundredths degrees (22.62°to 46.98°). Preferably, the conical plunger tip defines a plunger tip angle that is in a range from thirty-seven and fifty-five one-hundredths degrees to forty-four and fifty-eight one-hundredths degrees (37.55° to 44.58°).

In a preferred embodiment, the outlet passage includes a second frusto-conical portion that expands from the neck. The second frusto-conical portion is contiguous to the first frusto-conical portion of the outlet passage. Preferably, the second frusto-conical portion defines an expansion angle that is in a range from eleven and seventy-two hundredths degrees to nineteen and fifty-two hundredths degrees (11.72° to 19.52°).

In a preferred embodiment, the outlet tube forms a valve seat that circumscribes the base of the first frusto-conical portion. Furthermore, the distal end of the plunger forms a sealing surface that circumscribes the base of the conical plunger tip. The sealing surface is configured to engage the valve seat and block fluid flow through the outlet passage when the valve is in the closed configuration. Preferably, the valve seat is beveled at an angle and the sealing surface is beveled at a corresponding angle.

In another aspect of the present invention, a solenoid valve includes an outlet tube that forms an outlet passage. The outlet passage has a first frusto-conical portion that contracts to a neck and a second frusto-conical portion contiguous to the first frusto-conical portion and expanding from the neck. A plunger is slidably disposed within the solenoid valve and includes a conical plunger tip that extends into the first frusto-conical portion of the outlet passage. The plunger is movable between a closed configuration, wherein fluid flow through the outlet passage is blocked and an open configuration, wherein fluid flow through the outlet passage is permitted. Regardless of the position of the plunger, there is only one restriction of flow between a sealing surface formed by the plunger tip and a valve seat formed by the outlet tube.

The present invention will now be described, by way of example, with reference to the accompanying drawings, in which:

### BRIEF DESCRIPTION OF THE DRAWINGS

Figure 1 is a plan view of a solenoid valve in the closed position;
Figure 2 is a plan view of the solenoid valve in the open position; and
Figure 3 is a detail view of the distal end of the plunger and the corresponding outlet tube.

### DESCRIPTION OF AN EMBODIMENT OF THE INVENTION

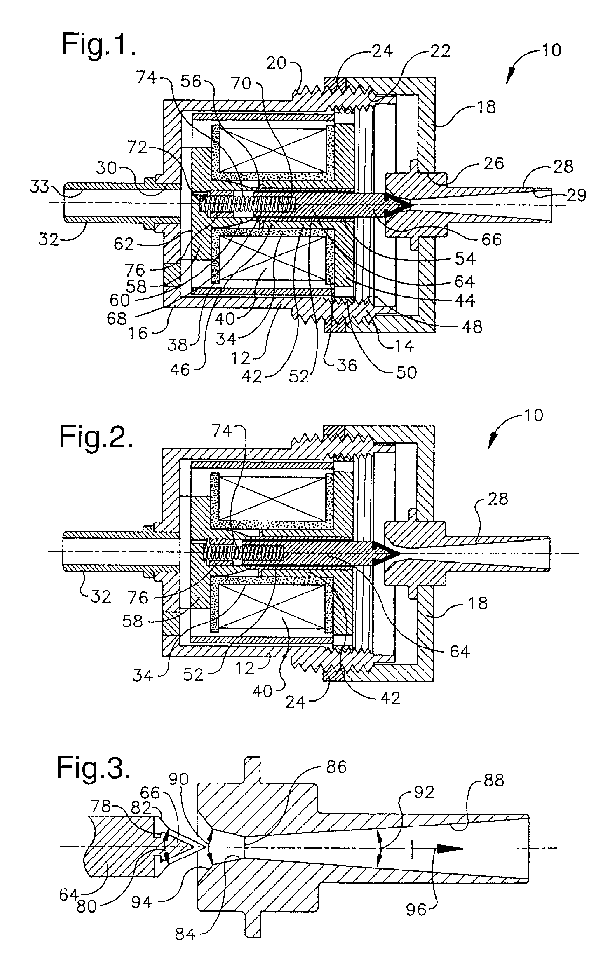

Referring initially to Figures 1 and 2, a pneumatic solenoid valve is shown and generally designated 10. As shown in Figures 1 and 2, the pneumatic solenoid valve includes a hollow, generally cylindrical case 12 that defines an open proximal end 14 and a closed distal end 16. Figures 1 and 2 show an end cap 18 that fits over the open proximal end 14 of the case 12. In a preferred embodiment, the proximal end 14 of the case is formed with external threads 20 and the end cap 18 is formed with internal threads 22. Thus, the end cap 18 is screwed onto the case 12 to enclose the open proximal end 14 thereof. Figures 1 and 2 also show a case nut 24 that is screwed onto the proximal end 14 of the case 12. It is to be appreciated that the case nut 24 is used to lock the end cap 18 onto the proximal end 14 of the case 12. As shown, the end cap 18 is formed with a central bore 26 into which an outlet tube 28 formed with an outlet passage 29 is preferably press fitted. Moreover, the distal end 16 of the case 12 is formed with a central bore 30 into which an inlet tube 32 is preferably press fitted. The inlet tube 32 is formed with an inlet passage 33.

Within the case 12 is a preferably plastic, generally "I" shaped spool 34 that defines a proximal end 36 and a distal end 38. A hollow toroidal coil 40 of wire closely surrounds the spool 34. A hollow generally "T" shaped, preferably magnetic plunger sleeve 42 is fitted into the distal end 38 of the spool 34. The plunger sleeve 42 defines a proximal end 44 and a distal end 46. In a preferred embodiment, the proximal end 14 of the case 12 forms internal threads 48 and the proximal end 44 of the plunger sleeve 42 forms external threads 50. As shown, the plunger sleeve 42 is screwed into the case 12 such that the external threads 50 formed by the plunger sleeve 42 engage the internal threads 48 formed by the proximal end 14 of the case 12. It is to be appreciated that the plunger sleeve 42 supports the spool 34 and the plunger tube, described below.

As shown in Figures 1 and 2, a generally cylindrical, preferably non-magnetic plunger tube 52 is installed within the plunger sleeve 42. The plunger tube 52 defines a proximal end 54 and a distal end 56. Figures 1 and 2 show a preferably magnetic plunger stop 58 that is preferably press fitted into the distal end 38 of the spool 34. The plunger stop 58 also defines a proximal end 60 and a distal end 62. A preferably metal plunger 64 that defines a proximal end 66 and a distal end 68 is slidably disposed within the plunger tube 52 between the outlet tube 28 and the plunger stop 58. The distal end 68 of the plunger 64 forms a first spring retention bore 70 and the plunger stop 58 forms a second spring retention bore 72.

Still referring to Figures 1 and 2, a spring 74 is installed in compression between the distal end 68 of the plunger 64 and the plunger stop 58 such that one end of the spring 74 is disposed in the first spring retention bore 70 and the other end of the spring 74 is disposed in the second spring retention bore 72. A preferably non-magnetic spring support collar 76 surrounds a portion of the spring 74 to prevent excess lateral motion of the spring 74.

It is to be understood that when the coil 40 is deenergized, the spring 74 biases the plunger 64 toward the outlet tube 28 until the pneumatic solenoid valve 10 is in the closed configuration, shown in Figure 1, wherein the proximal end 66 of the plunger 64 engages the outlet tube 28 to block the flow of air through the pneumatic solenoid valve 10. On the other hand, when the coil 40 is energized, a magnetic field is created that overcomes the force of the spring and moves the plunger 64 to the left looking at Figures 1 and 2 until the pneumatic solenoid valve 10 is in the open configuration as shown in Figure 2. In the open configuration, the proximal end 66 of the plunger 64 is distanced from the outlet tube 28 to allow air to flow through the valve 10.

Referring now to Figure 3, details concerning the outlet tube 28 and the proximal end 66 of the plunger 64 are shown. Figure 3 shows that the proximal end 66 of the plunger 64 includes a preferably rubber, conical plunger tip 78 that defines a plunger tip angle 80. As shown, the plunger tip 78 is installed over the distal end 66 of the plunger 64, but it is to be appreciated that the plunger tip 78 may be integrally formed there with. In a preferred embodiment, the plunger tip angle 80 is in a range from thirty-seven and fifty-five hundredths degrees to forty-four and fifty-eight hundredths degrees (37.55° to 44.58°). As shown in Figure 3, the plunger tip 78 forms a beveled sealing surface 82 that circumscribes the base of the conical plunger tip 78.

Figure 3 shows that the outlet passage 29 includes a first frusto-conical portion 84 that contracts to a neck 86. The outlet passage 29 also includes a second frusto-conical portion 88 that begins at the neck 86 and expands to the end of the outlet tube 28. As shown in Figure 3, the first frusto-conical portion 84 defines a contraction angle 90 that, preferably, is in a range from twenty-two and sixty-two hundredths degrees to forty-six and ninety-eight hundredths degrees (22.62° to 46.98°). The second frusto-conical portion 88 defines an expansion angle 92 that, in a preferred embodiment, is in a range from eleven and seventy-two hundredths degrees to nineteen and fifty-two hundredths degrees (11.72° to 19.52°).

As shown in Figure 3, the base of the first frusto-conical portion 84 of the outlet passage 29 is circumscribed by a beveled valve seat 94. When the valve 10 is in the closed configuration, as described above, the beveled sealing surface 82 of the plunger tip 78 engages the beveled valve seat 94 to block the fluid flow through the valve 10. It is to be understood that in order to effectively seal the outlet passage 29 the bevel angle of the sealing surface 82 is the same as the bevel angle of the valve seat 94.

When the valve 10 is in the open configuration, as shown in Figures 2 and 3, the beveled sealing surface 82 is slightly distanced from the beveled valve seat 94 and fluid, e.g., air, flows from the inlet passage 33 through the outlet passage 29, as indicated by direction arrow 96. The flow of fluid through the first frusto-conical portion 84 of the outlet passage 29 is restricted by the conical plunger tip 78 extending therein. More specifically, at each position of the plunger 64 between the closed position and the full open position, shown in Figure 2, there is only one flow restriction between the sealing surface 82 and the valve seat. As the plunger 64 moves towards or away from the outlet tube 28, the rate of flow through the outlet passage 29 changes linearly in proportion to the motion of the plunger 64. Thus, it easier to accurately control the rate of flow through the valve 10.

Additionally, it is to be appreciated that the pressure of the fluid exiting the valve 10 is independent of the flow restriction caused by the conical plunger tip 78. The pressure independence is due to the acceleration of flow through the first frusto-conical portion 84 of the outlet passage 29 and the subsequent expansion through the second frusto-conical portion 88.

With the configuration of structure described above, it is to be appreciated that the solenoid valve can be used to relatively easily and accurately control the flow rate of fluid there through. Moreover, regardless of the flow rate, the exit pressure of the fluid is constant.

While the particular SOLENOID VALVE as herein shown and described in detail is fully capable of attaining the above-described objects of the invention, it is to be understood that it is the presently preferred embodiment of the present invention and thus, is representative of the subject matter which is broadly contemplated by the present invention, that the scope of the present invention fully encompasses other embodiments which may become obvious to those skilled in the art, and that the scope of the present invention is accordingly to be limited by nothing other than the appended claims, in which reference to an element in the singular is not intended to mean "one and only one" unless explicitly so stated, but rather "one or more." All structural and functional equivalents to the elements of the above-described preferred embodiment that are known or later come to be known to those of ordinary skill in the art are expressly incorporated herein by reference and are intended to be encompassed by the present claims. Moreover, it is not necessary for a device or method to address each and every problem sought to be solved by the present invention, for it is to be encompassed by the present claims. Furthermore, no element, component, or method step in the present disclosure is intended to be dedicated to the public regardless of whether the element, component, or method step is explicitly recited in the claims. No claim element herein is to be construed under the provisions of 35 U.S.C. section 112, sixth paragraph, unless the element is expressly recited using the phrase "means for."

## Claims

1. A solenoid valve (10), comprising:
an outlet tube (28) forming at least one outlet passage (29);
a plunger (64) slidably disposed within the solenoid valve (10), the plunger (64) the plunger (64) being movable between a closed configuration wherein the plunger (64) engages the outlet tube (28) to block fluid flow through the outlet passage (29) and an open configuration wherein the plunger (64) is distanced from the outlet tube (28) to permit fluid flow through the outlet passage (29), the plunger (64) and the outlet tube (28) being configured to provide a flow rate that is linearly proportional to the motion of the plunger (64).

2. The solenoid valve of Claim 1, wherein the outlet passage (29) includes:
at least a first frusto-conical portion (84) that contracts to a neck (86) and the plunger (64) includes a conical plunger tip (78) that at least partially fits into the first frusto-conical portion (84) of the outlet passage (29).

3. The solenoid valve of Claim 2, wherein the first frusto-conical portion (84) defines a contraction angle (90) that is in a range from twenty-two and sixty-two one-hundredths degrees to forty-six and ninety-eight one-hundredths degrees (22.62° to 46.98°).

4. The solenoid valve of Claim 3, wherein the conical plunger tip (78) defines a plunger tip angle (80) that is in a range from thirty-seven and fifty-five one-hundredths degrees to forty-four and fifty-eight one-hundredths degrees (37.55° to 44.58°).

5. The solenoid valve of Claim 2, wherein the outlet passage (29) further includes:
at least a second frusto-conical portion (88) expanding from the neck (86), the second frusto-conical portion (88) being contiguous to the first frusto-conical portion (84) of the outlet passage (29).

6. The solenoid valve of Claim 5, wherein the second frusto-conical portion (88) defines an expansion angle (92) that is in a range from eleven and seventy-two hundredths degrees to nineteen and fifty-two hundredths degrees (11.72° to 19.52°).

7. The solenoid valve of Claim 2, wherein the outlet tube (28) forms a valve seat (94) circumscribing the base of the first frusto-conical portion (84) of the outlet passage (29).

8. The solenoid valve of Claim 7, wherein the plunger tip (78) forms a sealing surface (82) circumscribing the base of the plunger tip (78), the sealing surface (82) being configured to engage the valve seat (94) and block fluid flow through the outlet passage (29) when the valve (10) is in the closed configuration.

9. The solenoid valve of Claim 8, wherein the valve seat (94) is beveled at an angle and the sealing surface (82) is beveled at a corresponding angle.

10. A solenoid valve (10), comprising:
an outlet tube (28) forming an outlet passage (29) having a first frusto-conical portion (84) contracting to a neck (86) and a second frusto-conical portion (88) expanding from the neck (86); and
a plunger (64) slidably disposed within the solenoid valve (10), the plunger (64) including a conical plunger tip (78) that at least partially extends into the first frusto-conical portion (84) of the outlet passage (29), the plunger (64) being movable between a closed configuration wherein fluid flow through the outlet passage (29) is blocked and an open configuration wherein fluid flow through the outlet passage (29) is permitted.

11. The solenoid valve of Claim 10, wherein the first frusto-conical portion (84) defines a contraction angle (90) that is in a range from twenty-two and sixty-two one-hundredths degrees to forty-six and ninety-eight one-hundredths degrees (22.62° to 46.98°).

12. The solenoid valve of Claim 11, wherein the conical plunger tip (78) defines a plunger tip angle (80) that is in a range from thirty-seven and fifty-five one-hundredths degrees to forty-four and fifty-eight one-hundredths degrees (37.55° to 44.58°).

13. The solenoid valve of Claim 10, wherein the second frusto-conical portion (88) defines an expansion angle (92) that is in a range from eleven and seventy-two hundredths degrees to nineteen and fifty-two hundredths degrees (11.72° to 19.52°).

14. The solenoid valve of Claim 10, wherein the outlet tube (28) forms a valve seat (94) circumscribing the base of the first frusto-conical portion (84).

15. The solenoid valve of Claim 14, wherein the plunger (64) further forms a sealing surface (82) circumscribing the base of the conical plunger tip (78), the sealing surface (82) being configured to engage the valve seat (94) and block fluid flow through the outlet passage (29) when the valve (10) is in the closed configuration.

16. The solenoid valve of Claim 15, wherein the valve seat (94) is beveled at an angle and the sealing surface (82) is beveled at a corresponding angle.
